# EUROPEAN PATENT APPLICATION

(11) **EP 3 805 995 A1**
(43) Date of publication of application: **14.04.2021**
(21) Application number: 19202681.3
(22) Date of filing: 11.10.2019
(51) Int. Cl.: G06N 3/063

(54) **METHOD OF AND APPARATUS FOR PROCESSING DATA OF A DEEP NEURAL NETWORK**

(71) Applicant: Robert Bosch GmbH, 70442 Stuttgart (DE)
(72) Inventor: Ecco, Leonardo Luiz, 70193 Stuttgart (DE); Guntoro, Andre, 71263 Weil Der Stadt (DE); Korn, Robert, 71263 Weil Der Stadt (DE); Klaiber, Michael, 70176 Stuttgart (DE); Feldner, Ingo, 70192 Stuttgart (DE); Acosta Aponte, Axel Javier, 70176 Stuttgart (DE); Vogel, Sebastian, 76744 Schaidt (DE); Back, Kristine Juliane, 70563 Stuttgart (DE)

(57) **Abstract**

A computer-implemented method of processing data of a deep neural network, DNN, system, said DNN system comprising DNN topology information characterizing a structure of a deep neural network, DNN, and computing device information characterizing properties and/or a topology of at least one computing device for executing instructions associated with said DNN, said method comprising: providing said DNN topology information, providing said computing device information, determining a virtual hardware model based on said DNN topology information and said computing device information, wherein said virtual hardware model characterizes computational resources for executing at least some of said instructions associated with said DNN using said at least one computing device, said computational resources comprising at least one of: a) processing time, b) memory bandwidth, c) memory.

## Description

### Field of the Invention

Exemplary embodiments relate to a computer-implemented method of processing data of a deep neural network, DNN, system.

Further exemplary embodiments relate to an apparatus for processing data of a DNN system.

A deep (artificial) neural network, DNN, can be defined as an (artificial) neural network that comprises an input layer, an output layer, and one or more intermediate layers also referred to as "hidden" layers.

### Summary

Exemplary preferred embodiments relate to a computer-implemented method of processing data of a deep neural network, DNN, system, said DNN system comprising DNN topology information characterizing a structure of a deep neural network, DNN, and computing device information characterizing properties and/or a topology of at least one computing device for executing instructions associated with said DNN, said method comprising: providing said DNN topology information, providing said computing device information, determining a virtual hardware model based on said DNN topology information and said computing device information, wherein said virtual hardware model characterizes computational resources for executing at least some of said instructions associated with said DNN using said at least one computing device, said computational resources comprising at least one of: a) processing time, b) memory bandwidth, c) memory. The virtual hardware model enables to efficiently determine computational resources required for implementing said DNN using said computing device, without requiring to e.g. perform simulations at register-transfer level (RTL). This way, a DNN system can efficiently be assessed regarding its performance and e.g. the suitability of the computing device.

Preferably, said computational resources characterized by said virtual hardware model are non-physical computational resources, in contrast to the computing device and its components, which may be considered to represent physical computational resources, at least as far as hardware components of said computing device and its components is referred to.

According to further preferred embodiments, a performance of a DNN system and/or of a computing device for a DNN (system) may e.g. relate to at least one of: a) an execution time of performing an inference of said DNN, b) number of input/output (I/O) operations, e.g. to an external memory (smaller numbers are better), c) consumed electrical energy for performing an inference of said DNN.

According to further preferred embodiments, said DNN topology information characterizing a structure of a deep neural network may e.g. comprise one or more graphs describing the structure of the DNN, e.g. in the form of layers of nodes or processing elements ("artificial neurons") and connections between said nodes.

According to further preferred embodiments, said computing device may e.g. comprise at least one of: a) one or more multipliers, b) one or more adders, c) one or more processing elements, e.g. for evaluating an activation function (such as e.g. ReLU, rectified linear unit, sigmoid function, or the like) of said DNN, d) one or more memory devices for at least temporarily storing data of said DNN (e.g., weights) and/or related with said DNN and the like. According to further preferred embodiments, said computing device information characterizing properties and/or a topology of said at least one computing device for executing instructions associated with said DNN may e.g. comprise information on an organization of multipliers and/or memory devices or the like.

According to further preferred embodiments, said method further comprises determining a task graph associated with said computing device, particularly by using a deep learning compiler ("DNN compiler"), depending on said DNN topology information and on said virtual hardware model. According to further preferred embodiments, said task graph is a graph where each node represents a memory access or computation, e.g. on said virtual hardware model. According to further preferred embodiments, said task graph may also be considered as a virtual software model. As an example, said computation may e.g. be modeled by occupying a virtual hardware model for a predefined number of cycles.

According to further preferred embodiments, said method further comprises determining a virtual system model depending on said task graph and said virtual hardware model, wherein preferably said virtual system model a) is executable by said at least one computing device and/or b) characterizes a timing behavior and/or a performance of said DNN system, particularly for predetermined input stimuli.

According to further preferred embodiments, said method further comprises: using said virtual system model for determining a first parameter characterizing at least one of: a) a timing behavior of said DNN system, b) a performance of said DNN system.

According to further preferred embodiments, said virtual hardware model comprises information on at least one of: a) constraints, particularly hardware constraints, of said at least one computing device, b) physical annotations characterizing an operation of said at least one computing device. According to further preferred embodiments, said constraints may e.g. comprise information associated with a) a number and/or size of buffer memories, b) a number of multipliers, c) a topology of a bus of said computing device and/or between computing devices and memory devices, d) a number of processing elements of said computing device, e) a bandwidth of an (optional) external memory. According to further preferred embodiments, said physical annotations may e.g. comprise information on an operating frequency of one or more components of said computing device. According to further preferred embodiments, said physical annotations such as e.g. the operating frequency may e.g. be derived from a VLSI (very large scale integration) flow.

According to further preferred embodiments, said method further comprises: repeatedly determining said first parameter and modifying at least one of: a) said at least one computing device, b) at least a component of said at least one computing device, c) said structure of said DNN. This way, an efficient iterative design procedure for said DNN is provided. Advantageously, said first parameter may efficiently be determined, without the requirement of simulating the complete DNN system on a register-transfer level. Also, bottlenecks and other undesired aspects may be discovered at an early stage of the design procedure using the principle according to the embodiments.

Further preferred embodiments relate to an apparatus for performing the method according to at least one of the preceding claims.

Further preferred embodiments relate to a computer program comprising instructions which, when the program is executed by a computer, cause the computer to carry out the method according to the embodiments.

Further preferred embodiments relate to a computer-readable storage medium comprising instructions which, when executed by a computer, cause the computer to carry out the method according to the embodiments.

Further preferred embodiments relate to a data carrier signal carrying and/or characterizing the computer program according to the embodiments.

Further preferred embodiments relate to a use of the method according to the embodiments and/or of the apparatus according to the embodiments and/or of the computer program according to the embodiments for at least one of: a) determining a timing behavior of said DNN system, b) determining a performance of said DNN system, c) determining an efficiency of said DNN system, d) evaluating different design choices of at least one component of said DNN system, e) reducing turn-around times for evaluating different design choices of at least one component of said DNN system (e.g., for virtual prototyping).

### Brief description of the figures

Some exemplary embodiments will now be described with reference to the accompanying drawings, in which:
- Fig. 1: schematically depicts a simplified block diagram of a deep neural network system according to exemplary embodiments,
- Fig. 2: schematically depicts a simplified flow-chart of a method according to further exemplary embodiments,
- Fig. 3: schematically depicts a simplified block diagram of a deep neural network according to further exemplary embodiments,
- Fig. 4: schematically depicts a simplified flow-chart of a method according to further exemplary embodiments,
- Fig. 5: schematically depicts a simplified flow-chart of a method according to further exemplary embodiments,
- Fig. 6: schematically depicts a simplified block diagram of a computing device according to further exemplary embodiments,
- Fig. 7: schematically depicts a simplified block diagram of an apparatus according to further exemplary embodiments,
- Fig. 8: schematically depicts performance data according to further exemplary embodiments,
- Fig. 9: schematically depicts an exemplary graph related to operation of a neural network according to further exemplary embodiments,
- Fig. 10: schematically depicts a simplified block diagram of aspects of a computing device according to further exemplary embodiments,
- Fig. 11: schematically depicts an exemplary graph related to operation of a neural network according to further exemplary embodiments,
- Fig. 12: schematically depicts exemplary graphs related to operation of a neural network according to further exemplary embodiments, and
- Fig. 13: schematically depicts exemplary graphs related to operation of a neural network according to further exemplary embodiments.

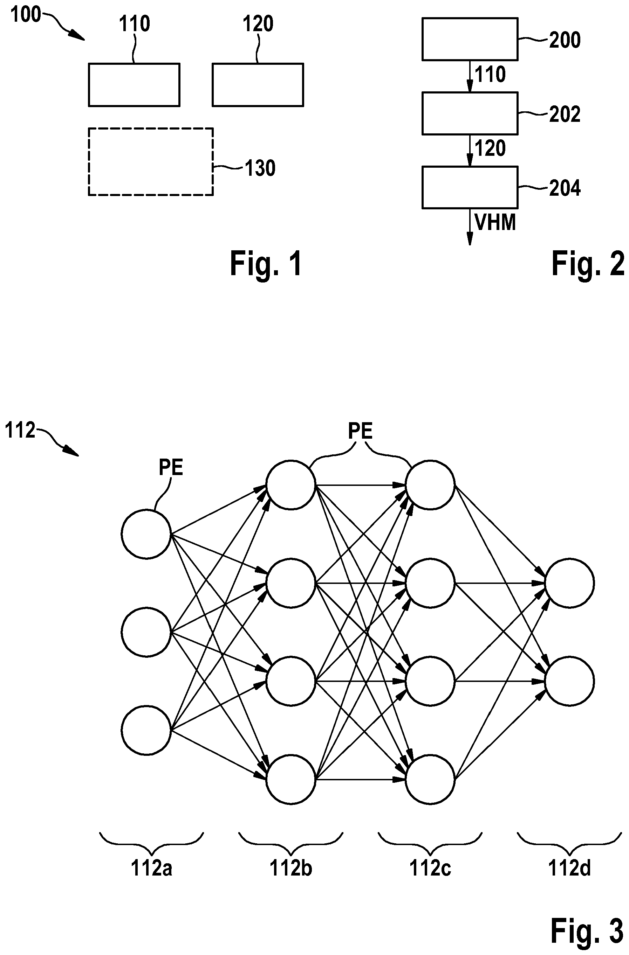

Figure 1 schematically depicts a simplified block diagram of a deep neural network (DNN) system 100 according to exemplary embodiments. The DNN system 100 comprises topology information 110 characterizing a structure of a deep neural network (DNN), and computing device information 120 characterizing properties and/or a topology of at least one computing device for executing instructions associated with said DNN. Exemplarily, the optional computing device is depicted by dashed rectangle 130 in Figure 1.

According to exemplary embodiments, the computing device 130 may be a planned (to-be-designed) computing device, i.e. not (yet) existing as a physical product, or an (already) existing physical product. Note that according to further exemplary embodiments, the optional computing device 130 does not necessarily form part of the DNN system 100. Rather, according to further exemplary embodiments, and as stated above, the DNN system 100 may comprise said topology information 110 characterizing the structure of a DNN and said computing device information 120 characterizing properties and/or a topology of said at least one computing device for executing instructions associated with said DNN.

Figure 3 schematically depicts an exemplary structure of a DNN 112 in the form of a graph ("DNN graph") according to further exemplary embodiments. The DNN 112 comprises an input layer 112a, an output layer 112d, and a plurality of (presently for example two) intermediate layers 112b, 112c. Said intermediate layers 112b, 112c may also be denoted as "hidden layers".

Each layer 112a, 112b, 112c, 112d of said DNN 112 may comprise one or more processing elements, which are collectively denoted with reference sign PE in Fig. 3 for the sake of clarity. According to further exemplary embodiments each of said processing elements PE may be configured to receive one or more input signals, e.g. from a preceding (or any other) layer or processing element PE, and to bias/weight and/or scale and/or sum said one or more input signals. Moreover, each of said processing elements PE may be configured to evaluate an activation function to determine an output signal of said specific processing element PE depending on said one or more input signals and/or one or more signals derived therefrom, e.g. by means of said bias and/or sum and/or scale operations and the like. Such output signals of a processing element PE may e.g. be used as an output signal of the DNN, especially for processing elements PE of the output layer 112d, and/or as an input for further processing element(s) PE of another layer of said DNN 112.

According to further exemplary embodiments, during a training mode of said DNN 112, said weights and/or bias values may e.g. be changed, e.g. to attain a desired nonlinear function approximation by means of said DNN 112 for specific input signals, while said weights and/or bias values may e.g. be constant during a regular operation of said trained DNN 112.

According to further exemplary embodiments, the processing elements PE or their function, respectively, may be implemented using one or more components of said optional computing device 130 (Fig. 1), wherein usually there are several (or even many) degrees of freedom for mapping the required functionality of the DNN's elements to said components of said optional computing device 130, which enables to optimize the use of said components of said optional computing device 130 for implementing the function of the DNN 112 (Fig. 3) regarding at least one optimization criterion such as energy efficiency, speed, low complexity, and the like.

In some conventional approaches, an implementation-based prototyping flow for a DNN system requires an implementation of all the hardware for evaluating a DNN at register-transfer level (RTL). To measure/evaluate the performance with such conventional approaches, there are two possibilities, either a simulation on RTL or a performance analysis after manufacturing a computing device. The RTL simulation has the disadvantage that running a single inference of a DNN requires several hours or days depending on the DNN's complexity. By contrast, manufacturing the computing device, provides the most accurate measurement results, but has a significantly slower turn-around time.

In view of these aspects of prior art, preferred exemplary embodiments propose a method as explained in the following with respect to the exemplary flow chart of Figure 2. Said method comprises: providing 200 said DNN topology information 110, providing 202 said computing device information 120, determining 204 a virtual hardware model VHM based on said DNN topology information 110 and said computing device information 120, wherein said virtual hardware model VHM characterizes computational resources for executing at least some of said instructions associated with said DNN 112 (Fig. 3) using said at least one computing device 130 (Fig. 1), said computational resources comprising at least one of: a) processing time, b) memory bandwidth, c) memory. The virtual hardware model VHM enables to efficiently determine computational resources required for implementing said DNN 112 using said computing device, without requiring to e.g. perform simulations at register-transfer level (RTL), as proposed by some conventional approaches. This way, a DNN system 100 can efficiently be assessed regarding its performance and e.g. the suitability of a/the (existing and/or planned, e.g. to-be-designed) computing device 130.

According to further preferred embodiments, said DNN topology information 110 (Fig. 1) characterizing a structure of a deep neural network may e.g. comprise one or more graphs describing the structure of the DNN, cf. Fig. 3.

According to further preferred embodiments, said computing device 130 (Fig. 1) may e.g. comprise at least one of: a) one or more multipliers and/or adders, b) one or more adders, c) one or more processing elements for evaluating an activation function of said DNN 112, d) one or more memory devices for at least temporarily storing data of said DNN 112 (e.g., weights) and/or related with said DNN (such as e.g. hyperparameters) and the like. According to further preferred embodiments, said computing device information 120 (Fig. 1) characterizing properties and/or a topology of said at least one computing device 130 for executing instructions associated with said DNN 112 may e.g. comprise information on an organization of multipliers and/or memory devices or the like.

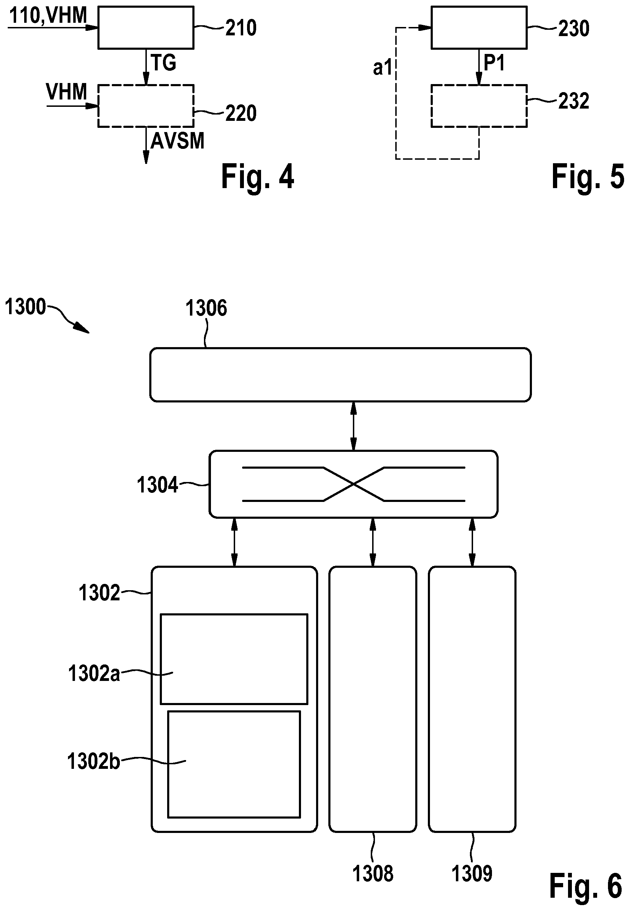

In this respect, Fig. 6 schematically depicts a simplified block diagram of a computing device 1300 according to further exemplary embodiments. The computing device 1300 may comprise a multiplier array 1302a comprising e.g. a plurality of multipliers which may e.g. evaluate multiplication operations as performed by applying weight factors within the processing elements PE (Fig. 3) of the DNN 112. According to further preferred embodiments, said computing device 1300 may comprise a, preferably local, memory 1302b (e.g., buffers), which may e.g. reside on the same chip or substrate as the multiplier array 1302a.

According to further preferred embodiments, the multiplier array 1302a and the local memory 1302b may collectively also be denoted as "neural complex engine", NCE 1302.

According to further preferred embodiments, said computing device 1300 may comprise an interconnect 1304 configured to establish one or more, preferably bidirectional, data connections between the computing device 1300 and other components such as e.g. an optional further, preferably external, memory 1306, and/or an optional direct memory access (DMA) device 1308, and/or an optional control processor 1309.

According to further preferred embodiments, at least one of feature maps, weights, and intermediate data may be stored in the external memory 1306. According to further preferred embodiments, (matrix) multiplications and other arithmetic operations may be performed by the Neural Complex Engine (NCE) 1302. According to further preferred embodiments, at least some memory transactions may be carried out by said direct memory access (DMA) device 1308. According to further preferred embodiments, all components 1302, 1304, 1306, 1308, 1309 of the computing device 1300 may be connected by said interconnect 1304 and may be controlled by said control processor 1309, which may also be referred to as a "house-keeping processor (HKP)". Particularly, the HKP 1309 may be configured to execute one or more task graphs associated with said DNN 112 (Fig. 3).

According to further preferred embodiments, said method further comprises, cf. Figure 4, determining 210 a task graph TG associated with said computing device 130, 1300, particularly by using a deep learning compiler ("DNN compiler"), depending on said DNN topology information 110 and on said virtual hardware model VHM. According to further preferred embodiments, said task graph TG is a graph where each node represents a memory access or computation (modelled by according processing cycles), e.g. on said virtual hardware model VHM. According to further preferred embodiments, said task graph TG may also be considered as a virtual software model.

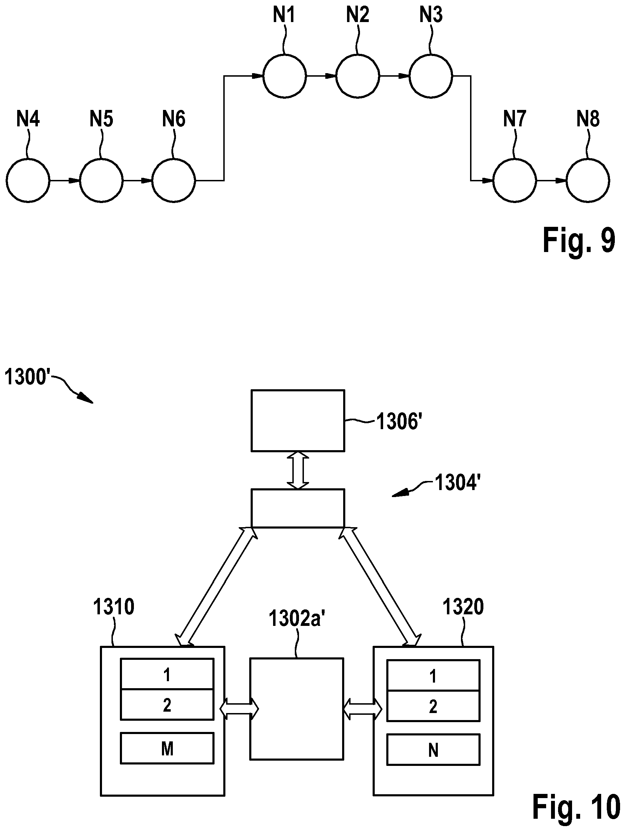

According to further preferred embodiments, said deep learning compiler is configured to convert the DNN graph (Fig. 3) to a hardware-adapted task graph TG, e.g. according to the hardware constraints that are either provided by the virtual hardware model VHM or the hardware implementation. According to further preferred embodiments, the resulting task graph TG may e.g. consider at least one of: a memory hierarchy, the on-chip memory sizes and the supported operations of the DNN system 100. Further details related to a transformation of the DNN graph (Fig. 3) to a task graph TG according to exemplary embodiments is explained further below with reference to Fig. 9 et seq.

According to further preferred embodiments, said deep learning compiler may receive at least one of the following information as input data: a) said virtual hardware model VHM, b) DNN graph (cf. Fig. 3). As an example, according to further exemplary embodiments, the DNN graph may e.g. be represented by a Keras description or TensorFlow description.

According to further preferred embodiments, said deep learning compiler may transform said DNN graph (Fig. 3), e.g. by adapting it to the computing device information 120 and/or hardware constraints (which may e.g. be represented by said computing device information 120). Exemplary aspects of said transformation according to further exemplary embodiments may comprise: a) memory-load-Operations may not exceed an input buffer size of the NCE 1302 (Fig. 6), b) NCE 1302 may be configured to perform Conv2D (two-dimensional convolution) operations, but no ADD (point-wise addition of n-dimensional tensor) operations, while an input for said DNN requires an ADD operation -> deep learning compiler may transform ADD-operations in Conv2D-operations, which may be executed by said NCE 1302. This way, according to further exemplary embodiments, the task graph TG may be obtained, which may also be considered as an hardware-adapted DNN graph, said hardware e.g. being the hardware of the computing device 130, said hardware e.g. being characterized by said computing device information 120.

According to further preferred embodiments, said method further comprises determining 220 (Fig. 4) a virtual system model AVSM depending on said task graph TG and said virtual hardware model VHM, wherein preferably said virtual system model AVSM a) is executable by said at least one computing device 130, 1300 and/or b) characterizes a timing behavior and/or a performance of said DNN system 100 (Fig. 1), particularly for predetermined input stimuli (which may e.g. provided to the input layer 112a of the DNN 112, cf. Fig. 3).

According to further preferred embodiments, cf. Figure 5, said method further comprises: using 230 said virtual system model for determining a first parameter P1 characterizing at least one of: a) a timing behavior of said DNN system 100, b) a performance of said DNN system 100.

According to further preferred embodiments, a performance of a DNN system 100 and/or of a computing device 130, 1300 for a DNN (system) may e.g. relate to at least one of: a) an execution time of performing an inference of said DNN, b) number of input/output (I/O) operations, e.g. to an external memory (smaller numbers are better), c) consumed electrical energy for performing an inference of said DNN.

According to further preferred embodiments, said virtual hardware model VHM comprises information on at least one of: a) constraints, particularly hardware constraints, of said at least one computing device 130, 1300, b) physical annotations characterizing an operation of said at least one computing device 130, 1300. According to further preferred embodiments, said constraints may e.g. comprise information associated with a) a number and/or size of buffer memories (which may e.g. be comprised in the (local) memory 1302b), b) a number of multipliers (e.g., of the multiplier array 1302a), c) a topology of a bus (cf. interconnect 1304) of said computing device, d) a number of processing elements of said computing device, e) a bandwidth of an (optional) external memory 1306. According to further preferred embodiments, said physical annotations may e.g. comprise information on an operating frequency of one or more components 1302, 1304, 1306 of said computing device 130, 1300.

According to further preferred embodiments, said method further comprises: repeatedly, cf. the dashed arrow a1 of Fig. 5, determining 230 said first parameter P1 and modifying at least one of: a) said at least one computing device 130, 1300, b) at least a component (e.g., multiplier array 1302a) of said at least one computing device 130, 1300, c) said structure of said DNN 112. This way, an efficient iterative design procedure for said DNN 112 is provided. Advantageously, said first parameter P1 may efficiently be determined, without the requirement of simulating the complete DNN system 100 on a register-transfer level, as proposed by at least some conventional approaches. This way, for example, in the course of few iterations a1 (Fig. 5) of the process according of Fig. 5, different values of the first parameter P1 may be efficiently be determined, e.g. for different (planned) design variants of the multiplier array 1302a, which enables to assess the expected performance of a corresponding computing device 130, 1300 without the requirement of performing lengthy RTL-type simulations or measurements with existing physical prototypes. After said few iterations a1, it may be decided, e.g. by a design engineer reviewing the different values of the first parameter P1, which design variant of said multiplier array 1302a to choose for constructing the computing device, based on the observed performance P1.

The principle according to preferred embodiments enables to provide a virtual-system-based prototyping flow (cf. e.g. Fig. 5) using said virtual hardware model VHM (Fig. 2). Preferably, the virtual hardware model VHM characterizes all hardware components of a (e.g., planned or to-be designed) computing device 130, 1300. Compared to some conventional RTL-based approaches, the principle according to preferred embodiments, using said virtual hardware model VHM, enables to describe components 1302a, 1302b (Fig. 6) at a higher level of abstraction, which at least in some cases may result in faster implementation time. According to further preferred embodiments, to determine the system performance of the DNN system 100 (Fig. 1), the task graph TG (Fig. 4) may be deployed in the virtual hardware model VHM, e.g. within the HKP 1309 which may control the execution and/or evaluation of said virtual hardware model VHM, which e.g. characterizes aspects of the NCE 1302.

According to further preferred embodiments, physical annotations, such as clock frequency, e.g. of the NCE 1302 and/or the further components 1304, 1306, may be considered by the virtual system model AVSM (Fig. 4).

According to further preferred embodiments, a methodology based on the virtual system model AVSM enables to assess a performance of the DNN system 100 either in a bottom-up or in a top-down manner. As an example, if, according to some embodiments, a DNN system's target performance is known, it is possible to assess physical requirements (e.g., a required frequency) of components, such as for the NCE 1302. As a further example, for a case where physical annotation(s) of a component is/are already available, a performance and/or scalability at system level may be estimated accurately according to further exemplary embodiments.

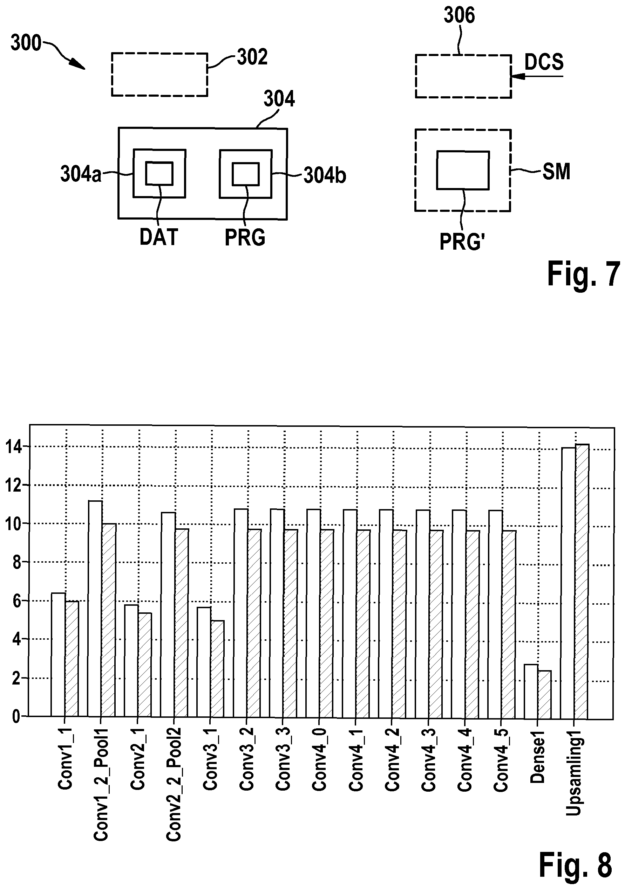

Further preferred embodiments relate to an apparatus for performing the method according to the embodiments. In this regard, Figure 7 schematically depicts a simplified block diagram of an apparatus 300 according to further exemplary embodiments. The apparatus 300 comprises at least one calculating unit 302 and at least one memory unit 304 associated with (i.e., usably by) said at least one calculating unit 302 for at least temporarily storing a computer program PRG and/or data DAT, wherein said computer program PRG is e.g. configured to at least temporarily control an operation of said apparatus 300, e.g. the execution of a method according to the embodiments, cf. e.g. the exemplary flow chart of Fig. 2.

According to further preferred embodiments, said at least one calculating unit 302 (Fig. 7) comprises at least one core (not shown) for executing said computer program PRG or at least parts thereof, e.g. for executing the method according to the embodiments or at least one or more steps thereof.

According to further preferred embodiments, the at least one calculating unit 302 may comprise at least one of the following elements: a microprocessor, a microcontroller, a digital signal processor (DSP), a programmable logic element (e.g., FPGA, field programmable gate array), an ASIC (application specific integrated circuit), hardware circuitry, a tensor processor, a graphics processing unit (GPU). According to further preferred embodiments, any combination of two or more of these elements is also possible.

According to further preferred embodiments, the memory unit 304 comprises at least one of the following elements: a volatile memory 304a, particularly a random-access memory (RAM), a non-volatile memory 304b, particularly a Flash-EEPROM. Preferably, said computer program PRG is at least temporarily stored in said non-volatile memory 304b. Data DAT, which may e.g. be used for executing the method according to the embodiments, may at least temporarily be stored in said RAM 304a.

According to further preferred embodiments, an optional computer-readable storage medium SM comprising instructions, e.g. in the form of a further computer program PRG', may be provided, wherein said further computer program PRG', when executed by a computer, i.e. by the calculating unit 302, may cause the computer 302 to carry out the method according to the embodiments. As an example, said storage medium SM may comprise or represent a digital storage medium such as a semiconductor memory device (e.g., solid state drive, SSD) and/or a magnetic storage medium such as a disk or harddisk drive (HDD) and/or an optical storage medium such as a compact disc (CD) or DVD (digital versatile disc) or the like.

According to further preferred embodiments, the apparatus 300 may comprise an optional data interface 306, preferably for bidirectional data exchange with an external device (not shown). As an example, by means of said data interface 306, a data carrier signal DCS may be received, e.g. from said external device, for example via a wired or a wireless data transmission medium, e.g. over a (virtual) private computer network and/or a public computer network such as e.g. the Internet. According to further preferred embodiments, the data carrier signal DCS may represent or carry the computer program PRG according to the embodiments, or at least a part thereof.

According to further preferred embodiments, the bar chart of Fig. 8 exemplarily depicts a performance measure (such as e.g. processing time in milliseconds, on the vertical axis) for a conventional hardware implementation of processing elements for a DNN system, cf. the white bars, and performance values as determined (cf. e.g. step 230 of Fig. 5) based on the virtual system model AVSM (Fig. 4) as obtained according to preferred embodiments, cf. the dashed bars of Fig. 8.

As an example, the conventional hardware implementation is based on an FPGA implementation of the DNN system 100 (Fig. 1), wherein a physical prototype was implemented on a conventional FPGA platform (e.g. using a Xilinx Virtex7 FPGA circuit), with an implementation of an NCE 1302 (Fig. 6) that has 32 x 64 multipliers (cf. multiplier array 1302a of Fig. 6) and which e.g. runs at 250 MHz. By contrast, as a further example, the virtual system model AVSM for obtaining the exemplary performance values of Fig. 8, has been described with a programming language library (e.g., using a Python library) specifically developed by the inventors for modeling the virtual system model AVSM.

According to further embodiments, the Python description of the virtual system model AVSM may be configured to automatically (i.e., without human interaction) generate a SystemC model that may be simulated by means of conventional modeling tools such as e.g. the Synopsys Platform Architect. According to further embodiments, as an example, the task graph TG (also cf. step 210 of Fig. 4) may be generated by tightly coupling a deep learning compiler with the virtual system model AVSM.

In this context, according to further exemplary embodiments, tightly coupling may relate to using a/the Deep-Learning Compiler and the virtual hardware model are in a fully automated (no user interaction required) flow. Particularly, according to further exemplary embodiments, one or more of the following aspects may be provided/used: 1. Deep-Learning Compiler loads hardware parameters (buffer sizes, # multipliers, supported operations) from virtual hardware model, 2. Deep Learning Compiler and virtual hardware and virtual software models are executed in the same tool flow, 3. Deep Learning Compiler creates task graph TG with input/output (IO) operations containing a number of bytes and compute operations containing a number of cycles.

For exemplary purposes, Figure 8 compares the processing time (vertical axis) of the physical (FPGA-based) prototype and the virtual system model AVSM for processing a (slightly modified version) of a DilatedVGG DNN as disclosed by Fisher Yu et al. 2015, "Multi-scale context aggregation by dilated convolutions", arXiv preprint arXiv:1511.07122 (2015).

As can be derived from Fig. 8, a total processing time for a single inference deviates by 8.3%, wherein individual layers deviate between 0.6 % and 11.2 %. This deviation is likely a result of a high-level model of the memory sub-system and may be further improved by adding more hardware properties into the virtual hardware model(s) VHM.

The exemplarily presented results of Fig. 8 show that virtual system models AVSM according to preferred embodiments are a promising alternative to classical implementation-based physical prototypes. Compared to an implementation at RTL level, a turn-around time for generating performance estimations of DNN systems 100 is significantly faster with virtual system models AVSM according to preferred embodiments. As a further example, according to further exemplary embodiments, an end-to-end design space exploration of DNN systems 100 with NCE(s) 1302 with variable sized multiplier arrays 1302a can easily be done "by a click of a button", e.g. virtually automatically. A tight coupling of a deep learning compiler to the virtual system models AVSM according to exemplary embodiments provides accurate results with less than 9 % deviation for the evaluated cases.

Further preferred embodiments relate to a use of the method according to the embodiments and/or of the apparatus 300 according to the embodiments and/or of the computer program PRG according to the embodiments for at least one of: a) determining a timing behaviour of said DNN system 100, b) determining a performance of said DNN system 100, c) determining an efficiency of said DNN system 100, d) evaluating different design choices of at least one component of said DNN system 100, e) reducing turn-around times for evaluating different design choices of at least one component of said DNN system 100.

In the following, further aspects and advantages of exemplary embodiments are listed: a) an end-to-end approach, ranging from an abstract description (virtual hardware model VHM), over deep learning compiler, to performance information of (planned and/or to-be designed and/or existing) hardware (e.g., computing device 130, 1300), b) simulation-based approach enables to discover bottlenecks of DNN system design already at a concept phase (e.g., without requirement of existing physical products), c) use of a "non-functional models", e.g. characterizing the NCE 1302 (and/or other components of the computing device 130, 1300) without performing the calculations of the DNN graph; rather, the virtual hardware model VHM characterizes said computational resources for executing at least some of said instructions associated with said DNN using said at least one computing device 130, 1300, said computational resources comprising at least one of: aa) processing time, bb) memory (bandwidth), d) computational resources (e.g., a processing time, which may e.g. be expressed in a number of cycles) for executing at least some of said instructions associated with said DNN using said at least one computing device 130, 1300 may e.g. be determined depending on a shape and/or type of one or more input tensors of said DNN and/or a shape and/or topology of said multiplier array 1302a.

According to further preferred embodiments, a physical computing device 1300 may be provided based on the principle according to the embodiments as follows: Providing an input vector for a simulation, i.e. evaluation of said virtual system model AVSM (Fig. 4), said input vector e.g. characterizing the virtual hardware model and optional hardware constraints, evaluating said virtual system model AVSM depending on said input vector, thus obtaining an output vector comprising one of more performance indicators, cf. e.g. the first parameter P1 of the exemplary embodiment according to Fig. 5.

According to further preferred embodiments, said simulation using the virtual system model AVSM may be used as a fit function for an (preferably iterative) optimization process, wherein e.g. genetic algorithms and/or other techniques for optimizing are applied to the input vector(s) (e.g., altering the virtual hardware model and/or the hardware constraints).

In the following, further details related to a transformation of a DNN graph (Fig. 3) to a task graph TG (also cf. step 210 of Fig. 4) according to further exemplary embodiments are explained with reference to Fig. 9 et seq..

Figure 9 schematically depicts an exemplary graph related to operation of a neural network according to further exemplary embodiments. According to further preferred embodiments, each layer of the DNN 112 (Fig. 3) consists of load, process and store node. As an example, node N1 of Fig. 9 represents a load (feature map) node, node N2 represents a process node, and node N3 represents a store (feature map) node, whereas the optional further nodes N4, N5, .., N8 characterize the following exemplary aspects: N4: Neural Network Start Token, N5: Layer Start Token, N6: Load Weights, N7: Layer End Token, N8: Neural Network End Token.

Figure 10 schematically depicts a simplified block diagram of aspects of a computing device 1300' according to further exemplary embodiments. As an example, the exemplary network graph of Fig. 9 may be run on the hardware architecture of the computing device 1300' of Fig. 10. The computing device 1300' of Fig. 10 comprises an input buffer 1310 having M many buffer elements, an output buffer 1320 having N many buffer elements (wherein generally, M may or may not be equal to N), a multiplier array 1302a', a further (e.g., external) memory 1306' and a bus 1304' interconnecting the devices 1306', 1310, 1320 with each other. As an example, the input buffer 1310 and the output buffer 1320 may be implemented similar to the (local or on-chip) memory 1302b of the computing device 1300 according to Fig. 6.

The exemplary architecture 1300' of Fig. 10 is a virtual model of the hardware architecture of the computing device 1300 and has a number of constraints that may affect the graph of Fig. 9: a) memory size of input buffer 1310 and output buffer 1320, b) concept of input and output buffer 1310, 1320, e.g. 1..M input buffers, 1..N output buffers (wherein a special case of M=1 or N=1 is called single-buffering and M=2 or N=2 is called double-buffering, c) bus topology of said bus 1304': uni-directional or bi-directional, and the like.

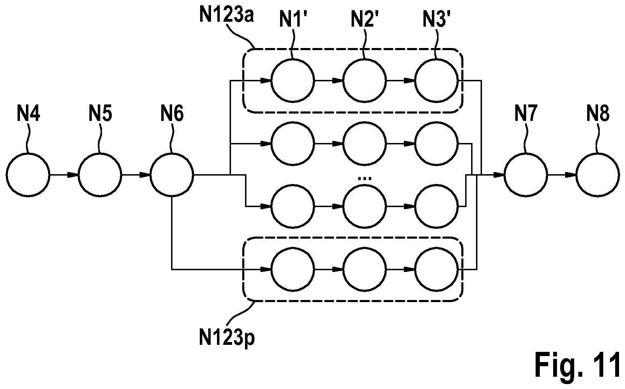

According to further preferred embodiments, if the input buffer 1310 or the output buffer 1320 is smaller than (data associated with) a load or store operation, tiling may be done, i.e. splitting loads and stores in multiple pieces. Figure 11 exemplarily depicts a further graph that may be obtained on the basis of the graph of Fig. 10 by applying tiling, cf. the plurality of load/process/store branches N123a, .., N123p of Fig. 11. As an effect of said tiling, each load and store operation of the graph of Fig. 11 has less data than the graph of Fig. 10 above. In other words, the nodes N1', N2', N3' of the load/process/store branch N123a of Fig. 11 in principle perform similar operations as compared to the nodes N1, N2, N3 of the graph of Fig. 9, however, the amount of data processed per node N1', N2', N3' is smaller due to the tiling technique. Further data may be processed in a similar manner by the further load/process/store branches of Fig. 11, only the last of which is explicitly referend with N123p for intelligibility.

According to further preferred embodiments, in the hardware configuration 1300' of Fig. 10, there may be three hardware components that can initiate operations: Input buffer ("IBuf") 1310, Output Buffer ("OBuf") 1320 and multiplier array ("MA") 1302a'. According to further preferred embodiments, process tasks may (preferably only) be mapped to the MA 1302a', load (preferably only) to the IBuf 1310 and store (preferably only) to the OBuf 1320.

According to further preferred embodiments, in real hardware, e.g. a physical computing device 130, 1300, 1300', a scheduler (this role may, according to further embodiments, be performed by the HKP 1309 of Fig. 6) may deploy nodes of the graph of Fig. 11 to hardware components of the computing device 130, 1300, 1300', e.g. a node characterizing the operation "Load Weights" to IBuf 1310. Once the task performed by the hardware (e.g., computing device 130, 1300, 1300') the IBuf 1310 signals the scheduler that it is finished, then all of the nodes connected to an outgoing edge may e.g. be scheduled to a (hardware) component of the computing device 130, 1300, 1300'.

According to further preferred embodiments, e.g. due to the properties of physical computing devices 130, 1300, 1300', there may also be implicit rules related to processing the graph of Fig. 11:
a) M many load operations may be performed before the IBuf 1310 is blocked, b) each process operation allows a new load operation, c) at most N many process operations may be allowed until the OBuf 1320 is blocked, d) each store operation allows another process operation, e) to perform a load(/store) operation, the IBuf 1310 (/OBuf 1320) need to block get access to the Memory 1306' via the bus 1304'. As an example, the bus 1304' / memory 1306' may allow K many simultaneous accesses (e.g. K=1) → If there are two simultaneous accesses from IBuf 1310 and OBuf 1320, one has to wait.

According to further preferred embodiments, these rules may be properties of the hardware component (e.g., computing device 130, 1300, 1300'), and may, therefore, not be part of the virtual hardware model VHM according to preferred embodiments. However, to get the correct behavior of the virtual hardware model, according to further preferred embodiments, at least one of these rules may be introduced by additional edges in the task graph TG.

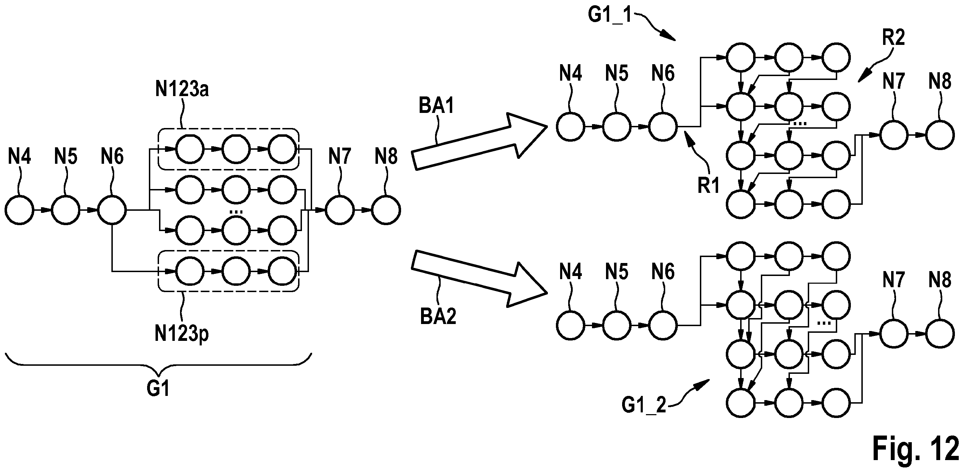

According to further preferred embodiments, a buffer concept may be used, which is exemplified below with reference to Figure 12. Fig. 12 schematically depicts a first graph G1, which corresponds with the graph explained above with reference to Fig. 11. Block arrow BA1 of Fig. 12 indicates a transformation of the first graph G1 to a modified graph G1_1 associated with single buffering, while block arrow BA2 of Fig. 12 indicates a transformation of the first graph G1 to a modified graph G1_2 associated with double buffering.

According to further preferred embodiments, adding said buffer concept may comprise one or more of the following steps: 1. removing all edges from "load weights" node N6 (cf. e.g. region R1 of modified graph G1_1), except for M many nodes, 2. introducing order by connecting all load operations, 3. removing all edges from store nodes to Layer End Token node (cf. e.g. region R2 of modified graph G1_1) except for the last M many nodes, 4. connect "process X" node with "load X+M" node, 5. connect "store X" node with "process X+N" node.

According to further preferred embodiments, bus abstraction may be added, which may be beneficial as a uni-directional bus only allows either a load operation OR a store operation at a time, whereas bi-directional busses allow one read operation and one simultaneous write operation. This way, the task graph TG (Fig. 4) may even further be adapted to properties of a computing device 130, 1300, 1300', increasing the precision of the virtual hardware model VHM and/or of the virtual system model AVSM.

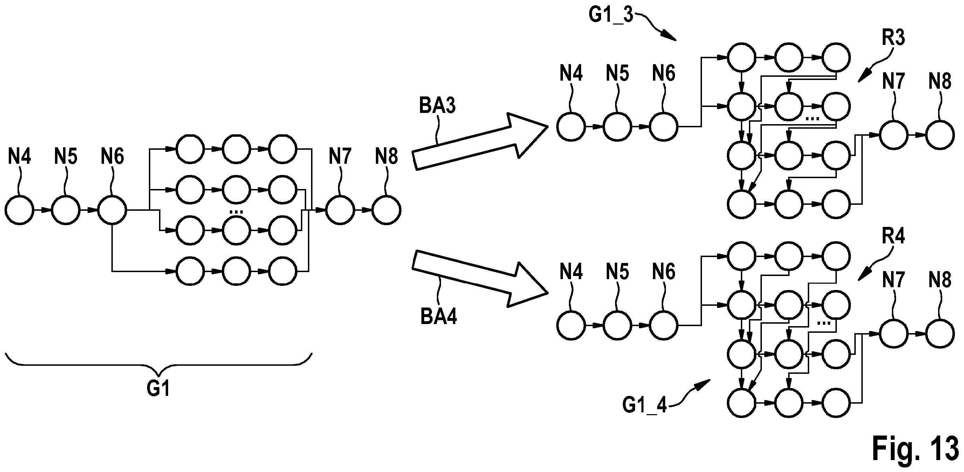

Figure 13 schematically depicts said first graph G1, which corresponds with the graph explained above with reference to Fig. 11. Block arrow BA3 of Fig. 13 indicates a transformation of the first graph G1 to a modified graph G1_3 associated with an uni-directional bus 1304' (Fig. 10), while block arrow BA4 of Fig. 13 indicates a transformation of the first graph G1 to a modified graph G1_4 associated with a bi-directional bus 1304'. According to further preferred embodiments, this may be modeled by adapting step 5 (i.e., connect "store X" node with "process X+N" node) explained above with respect to Fig. 12 accordingly. As an example, according to further preferred embodiments, for a uni-directional bus (cf. block arrow BA3 of Fig. 13), a "Store X" node is connected with a "Load X+N" node in the modified graph G1_3 (cf. e.g. region R3 of modified graph G1_3), whereas for a bi-directional bus, a "Store X" node is connected with a "Process X+N" node (cf. e.g. region R4 of modified graph G1_4).

In the following, further aspects, advantages and exemplary embodiments are disclosed. The principle according to the embodiments facilitates end-to-end performance estimation and/or measurement of deep neural network systems 100 (Fig. 1), which become more important with increasing complexity of DNN systems consisting of hardware and software components.

The methodology according to exemplary embodiments enables to attain a reduced turn-around time for evaluating different design choices of hardware 130, 1300, 1300' and software components of DNN systems 100. According to preferred embodiments, this reduction may e.g. be achieved by moving the performance estimation from the implementation phase to the concept phase by employing said virtual hardware model VHM (Fig. 2), e.g. instead of gathering measurement results from physical prototypes, as proposed by some conventional approaches.

According to preferred embodiments, deep learning compilers may introduce hardware specific transformations and are, therefore, considered a part of the design flow of virtual system models AVSM (Fig. 4), e.g. to extract end-to-end performance estimations.

According to inventors' analysis, systems to perform the inference of deep neural networks have become more important in many fields from automotive to Industry 4.0 applications. In the beginning of neural network research there were a limited number of computational kernels which lend themselves to simple hardware structures for efficient execution. With the emerge of graphics processing units (GPUs) deeper neural network structures were feasible to train and deploy, as they were able to efficiently map those computational kernels.. Future DNNs are expected to become even more complex in structure and the number of different operations. Designing systems to process these DNNs requires an efficient and powerful methodology to balance compute and communication resources.

According to preferred embodiments, models of hardware or software components that only mimic the timing behavior and the memory transactions of a component while neglecting functional computation, may be referred to as non-functional virtual models. As an example, the virtual hardware model VHM according to exemplary embodiments explained above may be considered to constitute such functional model.

According to preferred embodiments, virtual hardware models VHM are executable using high-level descriptions of hardware elements (e.g. CPUs, interconnects or memories) that annotate operations with simulation cycles (e.g., characterizing processing time). According to preferred embodiments, a deep learning compiler may be used to transform the DNN graph into a task graph TG, where each node represents a memory access or processing cycles on said virtual hardware model VHM.

According to preferred embodiments, in a DNN system 100 (Fig. 1), the requirements on processing elements, as well as the requirements on communication infrastructure, may be mainly driven by the topology and the arithmetic operations of the target DNNs. When trying to evaluate novel concepts for DNN systems 100 that consist both of hardware and software components, a common conventional approach is to implement a prototype and measure the performance of the target DNNs. This requires development of software and hardware components (and possibly manufacturing of hardware) for the evaluation of one specific concept. The huge design space for DNN systems in the algorithmical domain, the software domain and the hardware domain, makes finding and evaluating efficient concepts considerably time consuming when using said conventional approaches.

The principle according to the embodiments enables to efficiently provide an end-to-end methodology that considers both hardware architecture e.g. of the computing device 130, 1300, 1300' and a software tool chain (e.g., comprising a deep learning compiler), which may be used to design DNN systems.

Further exemplary embodiments relate to a computer-implemented method of processing data of a deep neural network, DNN, system, said DNN system comprising DNN topology information characterizing a structure of a deep neural network, DNN, and computing device information characterizing properties and/or a topology of at least one computing device for executing instructions associated with said DNN, said method comprising: providing said DNN topology information, providing said computing device information, determining a virtual hardware model based on said computing device information and, optionally, on said DNN topology information, wherein said virtual hardware model characterizes computational resources for executing at least some of said instructions associated with said DNN using said at least one computing device, said computational resources comprising at least one of: a) processing time, b) memory bandwidth, c) memory.

## Claims

1. A computer-implemented method of processing data of a deep neural network, DNN, system (100), said DNN system (100) comprising DNN topology information (110) characterizing a structure of a deep neural network, DNN, (112) and computing device information (120) characterizing properties and/or a topology of at least one computing device (130; 1300; 1300') for executing instructions associated with said DNN (112), said method comprising: providing (200) said DNN topology information (110), providing (202) said computing device information (120), determining (204) a virtual hardware model (VHM) based on said DNN topology information (110) and said computing device information (120), wherein said virtual hardware model (VHM) characterizes computational resources for executing at least some of said instructions associated with said DNN (112) using said at least one computing device (130), said computational resources comprising at least one of: a) processing time, b) memory bandwidth, c) memory.

2. Method according to claim 1, further comprising: determining (210) a task graph (TG) associated with said computing device (130), particularly by using a deep learning compiler, depending on said DNN topology information (110) and on said virtual hardware model (VHM).

3. Method according to claim 2, further comprising: determining (220) a virtual system model (AVSM) depending on said task graph (TG) and said virtual hardware model (VHM), wherein preferably said virtual system model (AVSM) a) is executable by said at least one computing device (130) and/or b) characterizes a timing behaviour and/or a performance of said DNN system (100), particularly for predetermined input stimuli.

4. Method according to claim 3, further comprising: using (230) said virtual system model (AVSM) for determining a first parameter (P1) characterizing at least one of: a) a timing behaviour of said DNN system (100), b) a performance of said DNN system (100).

5. Method according to any of the preceding claims, wherein said virtual hardware model (VHM) comprises information on at least one of: a) constraints, particularly hardware constraints, of said at least one computing device (130), b) physical annotations characterizing an operation of said at least one computing device (130).

6. Method according to at least one of the claims 4 to 5, further comprising:
repeatedly (a1), particularly for a predetermined number of repetitions, determining (230) said first parameter (P1) and modifying (232) at least one of: a) said at least one computing device (130; 1300; 1300'), b) at least a component of said at least one computing device (130; 1300; 1300'), c) said structure of said DNN (112).

7. Apparatus (300) for performing the method according to at least one of the preceding claims.

8. A computer program (PRG) comprising instructions which, when the program (PRG) is executed by a computer (302), cause the computer (302) to carry out the method according to at least one of the claims 1 to 6.

9. A computer-readable storage medium (SM) comprising instructions (PRG') which, when executed by a computer (302), cause the computer (302) to carry out the method according to at least one of the claims 1 to 6.

10. A data carrier signal (DCS) carrying and/or characterizing the computer program (PRG) of claim 8.

11. Use of the method according to at least one of the claims 1 to 6 and/or of the apparatus (300) according to claim 7 and/or of the computer program (PRG) according to claim 8 for at least one of: a) determining a timing behaviour of said DNN system (100), b) determining a performance of said DNN system (100), c) determining an efficiency of said DNN system (100), d) evaluating different design choices of at least one component of said DNN system (100), e) reducing turn-around times for evaluating different design choices of at least one component of said DNN system (100).
